Europäisches Patentamt

European Patent Office

Office européen des brevets

(11) Publication number: **0 145 110**
**A1**

# EUROPEAN PATENT APPLICATION

(21) Application number: **84304510.5**

(22) Date of filing: **02.07.84**

(51) Int. Cl.⁴: **F 16 B 2/08**
**F 16 L 3/12**

(30) Priority: **15.07.83 DE 3325685**

(43) Date of publication of application:
**19.06.85 Bulletin 85/25**

(84) Designated Contracting States:
**FR GB IT SE**

(71) Applicant: **TUCKER FASTENERS LIMITED**
**Walsall Road**
**Birmingham B42 1BP(GB)**

(84) Designated Contracting States:
**GB**

(71) Applicant: **USM Corporation**
**426 Colt Highway**
**Farmington Connecticut 06032(US)**

(84) Designated Contracting States:
**FR IT SE**

(72) Inventor: **Richmond, John Frederick**
**'The Bungalow' Hopton Hall Lane**
**Hopton Stafford ST18 0AZ(GB)**

(72) Inventor: **Mauer, Dieter**
**Ostendstrasse 10**
**6304 Lollar(DE)**

(72) Inventor: **Baum, Heinz Otto**
**Klein-Lindenerstrasse 48**
**6300 Giessen-Allendorf(DE)**

(74) Representative: **Spencer, Hubert John et al,**
**PO Box No. 88 Belgrave Road**
**Leicester LE4 5BX(GB)**

(54) Cable strap.

(57) A cable strap has a slot 14 which provides a seat 22 near one end of the strap for a stud projecting from a support and able to hold the strap while it is wrapped around the cable harness. A skirt 18 at the other end of the strap is then pushed onto the stud and the first end of the strap pulled underneath it to tighten the strap. Teeth 42 on the strap are engaged by detents 40 on the skirt 18 to keep the strap tight.

Fig. 4

Cable Strap

This invention is concerned with a cable strap for securing a bundle of cables at the locality of a screw-threaded stud projecting from a support, comprising a flat strip of flexible plastics material with a seat near one end of the strip for reception over the stud and at least temporary retention by engagement with the threads thereof, and a skirt at the other end of the strip having inwardly directed transverse ridges for secure engagement with the threads of the same stud after the strap has encircled the bundle of cables.

A strap of the aforementioned kind but shown securing a pipe rather than a bundle of cables is described, for example, in West German Patent Specification 1475035, where the length of the strap between the seat for initial reception over the stud and the skirt for engaging the same stud subsequently is that required just to encircle the pipe. Where such a strap is used for securing a pipe, especially where the pipes being fixed are all the same diameter, there is not usually any significant inconvenience in ensuring that a strap of the right length is chosen to secure the pipe, but in securing cable harnesses, it is much more difficult to arrange that the strap assembled on the stud will always be the right sized one for the bundle of cables which come to make up the harness at that locality. Moreover, in laying out cables for electrical equipment or motor vehicle chassis, for example, it is desirable to be able to secure some in place by means of a strap, and later on to undo the strap and embrace some more cables. The strap of the said specification 1475035 is not adapted to be released and refastened in a manner which would permit the insertion of additional cables or pipes.

It is accordingly an object of the present invention to provide an improved cable strap which can be used to secure different sized bundles of cables without having to stock different sized straps.

It is also an object of the invention to provide an improved cable strap which can readily be released and resecured to permit the addition of further cables to a bundle embraced by the strap.

The foregoing objects are achieved in accordance with the present invention in that a cable strap as referred to is characterised in that a slot leads lengthwise along the strip from said seat towards said skirt and in that along each side of said slot on the side of the strip which is uppermost when said seat is assembled on a stud is a row of transverse teeth, the skirt having detents depending therefrom in alignment with said rows of teeth so as to hold the strap in a tightened condition by engagement of the detents and teeth after a bundle of cables has been encircled by the strap, the skirt pushed down onto the stud, and the strip pulled transversely of the stud beneath the skirt.

Preferably, a tab by which the strip of a strap in accordance with invention can be pulled extends from the seat in the opposite direction to that in which the slot lies. It is also preferred that the skirt is elongated as viewed in cross-section transversely of the axis of a stud on which it is assembled, and has ridges projecting from the long sides of the skirt at the opposite ends of its cross-sectional minor axis, whereby the skirt can be deformed in response to pressure applied to the end of its cross-sectional major axis to spread apart said ridges and release them from the thread of the stud. The ridges may extend widthwise over a central portion of said skirt for about the same distance as the width of stud. The skirt may have stop members projecting inwardly from opposite ends of its cross-sectional major axis to ensure disposition of the skirt with its ridges engaging the stud and to limit their deformation over the skirt when being released from the stud.

There now follows a detailed description to be read with reference to the accompanying drawings of a cable strap embodying the invention and illustrative thereof. It will be realised that this illustrative cable strap has been selected for description by way of example and not of limitation of the invention.

In the accompanying drawings:

Figure 1 is a plan view, with parts broken away, of the illustrative cable strap;

Figure 2 is a view of the illustrative cable strap in longitudinal section on the line II-II of Figure 1;

Figure 3 is fragmentary view of a skirt of the strap as seen on the section line III-III of Figure 1;

Figure 4 is a view of the illustrative cable strap in side elevation, partly in section and partly broken away, shown embracing a bundle of cables and secured to a screw threaded-stud; and

Figure 5 is a plan view of a skirt at one end of the illustrative strap being released from the stud shown in Figure 4.

The illustrative cable strap is moulded in one piece of a thermoplastic material which is flexible and resilient, for example nylon. It comprises a flat flexible strip 10 having a wide portion 12 with a slot 14 running the length of it and a narrow portion 16 terminating at a skirt 18. The skirt has a cross-section which is elliptical, its major diameter transverse to the strip 10; the portion 16 of the strip is forked at 20 to support the ends of the skirt.

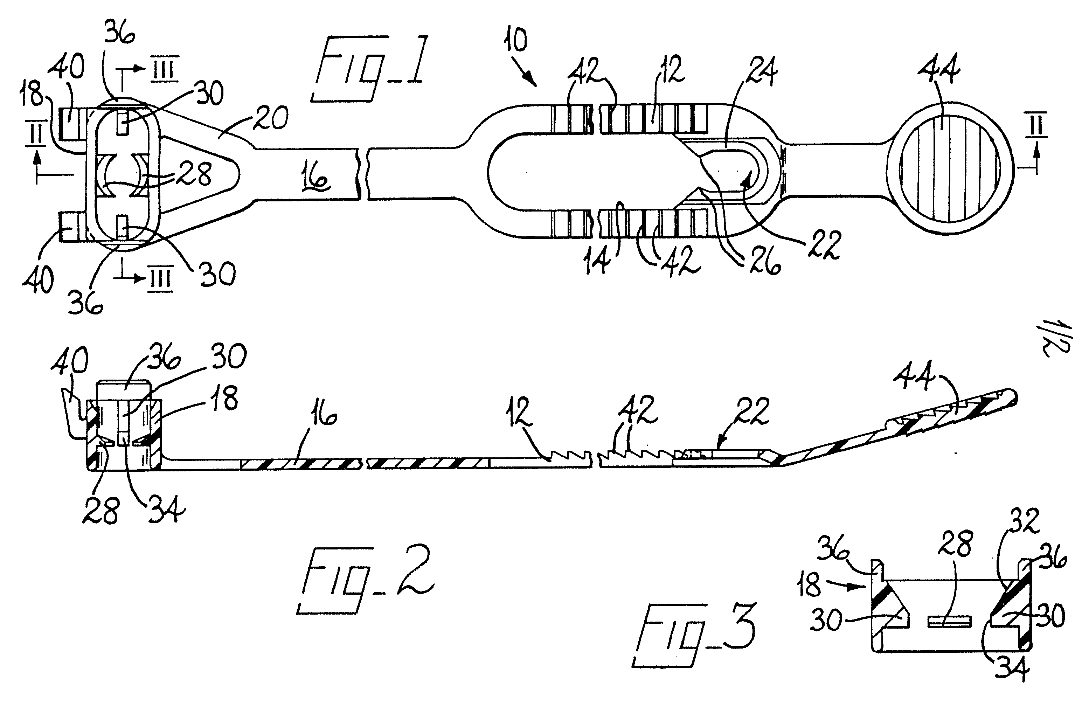

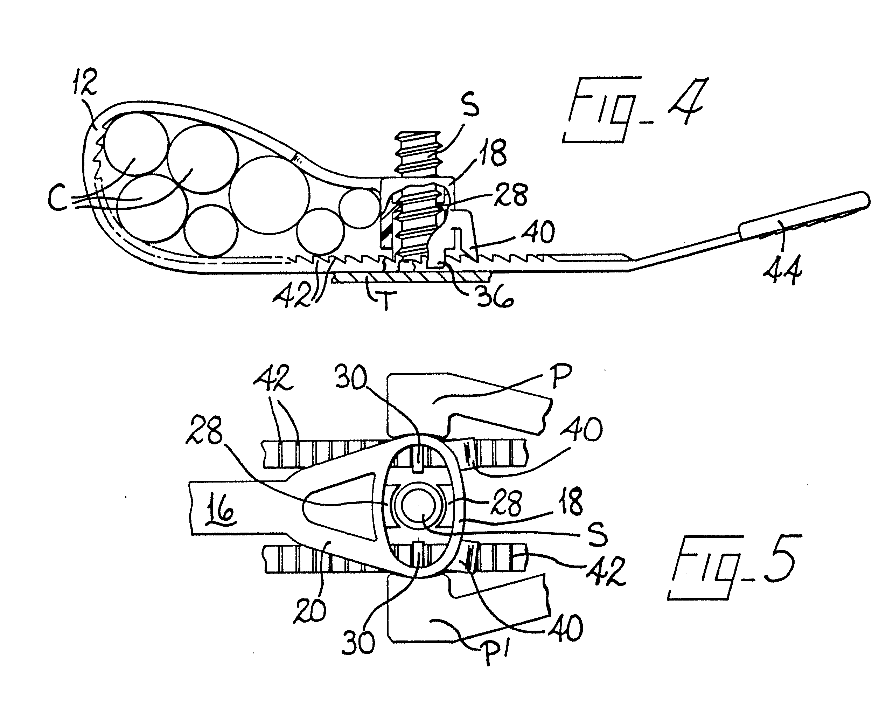

At one end of the slot 16 of the strip 10 the strap has a seat 22 provided by a ledge 24 projecting inwardly round the slot at that end, the ledge broadening at its open end to provide a constriction 26. The ledge can be introduced into the trough of a screw thread, or between annular ribs, of a stud S (Figures 3 and 4) and held there by the constriction 26 to afford at least temporary retention of the seat 22 on the stud S. A bundle of cables C can now be received by the strap and the skirt 18 brought over them and pushed down onto the stud S (Figure 3).

Referring now to the skirt 18, and regarding it as shown in Figure 4 where it is assembled on the stud S projecting upwardly from a support T, it has two inwardly directed transverse ridges 28 disposed centrally of the long sides of the skirt and each about as long as the stud S is wide. The ridges 28 have flat tops and sloping under sides for ease of assembly as the skirt slides down the stud and to ensure retention by a maximum resistance to being pulled off; the crests of the ridges 28 are concavely arched for engagement with the screw thread. At each end of the cross-sectional major axis of the skirt is a vertically disposed stop member 30 with a long inclined face 32 and short vertical face 34 to guide the skirt 18 onto the stud S and ensure the ridges 28 (or at least one of them) engage the thread.

Projecting downwardly at each end of the skirt 18 are feet 36 which, when the skirt is fully pushed down onto the stud S, abut the support T leaving sufficient space between the lower edge of the skirt and the support to accommodate the wide portion 12 of the strip 10, with the stud in the seat. At such time, two detents 40 projecting forwardly and downwardly from the skirt bear resiliently on the upper side of the strip 10 in alignment with the margins of the strip at either side of the slot 14. Each of these margins is provided on its upper surface with a row of transverse teeth 42 shaped ratchet-wise for engagement by the detents 40. Such engagement is effected, after the skirt has been pushed down the stud over the wide portion of the strip 10, by pulling on the extension of the strip, which affords a tab 44 which can readily be grasped for the purpose. Approaching faces of the detents 40 and teeth 42 are inclined to facilitate the teeth riding under the detents, opposing stop faces on the opposite sides of the detents and teeth being vertical, or nearly so. Thus, the strap is restrained by the detents 40 from loosening its grip on the bundle of cables after it has been tightened.

The tab 44 is shown having a circular termination with transversely ribbed surfaces for ease of gripping between one's fingers when pulling it.

If it is desired to release the strap, for example to remove the skirt 18 from the stud S temporarily to add more cables to the bundle, a suitable pliers-like tool with jaws P and $P^1$ may be used to squeeze the skirt 18 by applying pressure transversely of the stud axis at the ends of its cross-sectional major diameter. As shown in Figure 5, such squeezing results in deformation of the skirt 18 to a more circular configuration, limited by the stop members 30, in which the ridges 28 have been sufficiently widely separated to disengage from the stud.

Claims:

1.   A cable strap for securing a bundle of
cables at the locality of a screw threaded stud projecting
from a support, comprising a flat strip of flexible
plastics material with a seat near one end of the strip for
reception over the stud and at least temporary retention by
engagement with the threads thereof, and a skirt at the
other end of the strip having inwardly directed transverse
ridges for secure engagement with the threads of the same
stud after the strap has encircled the bundle of cables,
characterised in that a slot (14) leads lengthwise along
the strip (10) from said seat (22) towards said skirt (18)
and in that along each side of said slot (14) on the side
of the strip (10) which is uppermost when said seat (22) is
assembled on a stud (S) is a row of transverse teeth (42),
the skirt (18) having detents (40) depending therefrom in
alignment with said rows of teeth (42) so as to hold the
strap in a tightened condition by engagement of the detents
(40) and teeth (42) after a bundle of cables (C) has been
encircled by the strap, the skirt (18) pushed down onto the
stud, and the strip (10) pulled transversely of the stud
beneath the skirt (18).

2.   A strap according to claim 1 further
characterised in that the strip (10) extends from said seat
(22) in the opposite direction to the slot (14) to provide
a tab by which it can readily be pulled as aforesaid.

3.   A strap according to claim 2 further
characterised in that the skirt (18) is elongated as viewed
in cross-section transversely of the axis of a stud on
which it is assembled, and in that ridges (28) project from
the long sides of the skirt (18) at the opposite ends of
its cross-sectional minor axis, the skirt (18) being
deformable in response to pressure applied at the ends of its cross-sectional major axis to spread apart said ridges and release them from the threads of the stud.

4. A strap according to claim 3 further characterised in that said ridges (28) extend widthwise over a central portion of said skirt (18) for about the same distance as the width of the stud (S).

5. A strap according to claim 4 further characterised in that stop members (30) project inwardly from said skirt (18) at the opposite ends of its cross-sectional major axis to ensure disposition of the skirt (18) with said ridges (28) engaging the threads of the stud and to limit deformation of the skirt (18).

0145110

1/2

Fig-1

Fig-2

Fig-3

Fig_4

Fig_5

0145110

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | DE-A-1 475 035 (PAUL HELLERMANN GmbH) * Pages 5,6; page 7, lines 1-15; figures 1-5 * | 1 | F 16 B 2/08 F 16 L 3/12 |
| A | GB-A- 815 606 (HOWARD CLAYTON-WRIGHT LTD.) * Page 1, line 65 - page 2, line 32; figures * | 1,4 | |
| A | GB-A-2 068 448 (A. RAYMOND) * Page 1, line 91 - page 2, line 12; figures 1-4 * | 1-3 | |
| A | FR-A-2 505 418 (C. RAGOT) * Page 6, line 25 - page 7, line 29; figures 1-5 * | 3-5 | TECHNICAL FIELDS SEARCHED (Int Cl 4) F 16 B F 16 L B 65 D |

The present search report has been drawn up for all claims

| Place of search THE HAGUE | Date of completion of the search 04-10-1984 | Examiner VAN WESTENBRUGGE A. |
|---|---|---|

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document